Europäisches Patentamt

European Patent Office

Office européen des brevets

(11) Publication number: **0 058 303**
**B1**

(12) **EUROPEAN PATENT SPECIFICATION**

(45) Date of publication of patent specification: 27.12.84

(21) Application number: 82100332.4

(22) Date of filing: 19.01.82

(51) Int. Cl.³: **C 02 F 1/44**, B 01 D 13/00 // A61M1/03

(54) A water-purification unit with a liquid cooled pump motor.

(30) Priority: 13.02.81 PCt/se81/00038

(43) Date of publication of application:
25.08.82 Bulletin 82/34

(45) Publication of the grant of the patent:
27.12.84 Bulletin 84/52

(84) Designated Contracting States:
AT BE CH DE FR GB IT LI LU NL SE

(56) References cited:
DE-A-2 301 904
DE-A-2 804 653
DE-C- 516 474
GB-A-2 002 736
US-A-2 000 874
US-A-2 763 214
US-A-3 371 613

(73) Proprietor: Gambro Lundia AB
Box 10101
S-220 10 Lund (SE)

(72) Inventor: Jönsson, Ulf Lennart Percy
Ägovägen 7
S-240 20 Furulung (SE)
Inventor: Falkvall, Thore Edvard
Karl X Gustafs gata 67
S-252 40 Helsingborg (SE)

(74) Representative: Boberg, Nils Gunnar Erik
Gambro AB Patent Department Box 10101
S-220 10 Lund (SE)

Courier Press, Leamington Spa, England.

## Description

### Technical Field

The present invention relates to a water-purification unit comprising a module for reverse osmosis with an inlet for non-purified water, an outlet for purified water and an outlet for non-purified water, the water being supplied to the module by means of a motor-driven pump, the motor of the pump being cooled with the help of the water input, the latter being heated at the same time.

Such a module comprises diaphragms of optional shape, but of a composition designed to let through substantially only water molecules and molecules of the same order of magnitude. The diaphragms consist preferably of hollow fibres, but they may also take the form of e.g. plane films. If such a module contains pure water on the one side of a diaphragm and impure water on the opposite side, the so-called osmotic effect causes the pure water to endeavour to force its way across to the impure side to produce dilution and to even out the concentration. The concept of reverse osmosis here means that the pressure on the impure side is increased, so that the osmosic effect is offset and the water instead passes over from the impure side to the pure side.

### Background Art

The water-purification unit of the above-mentioned type has the disadvantage among other things that the noise level is too high to allow individual small units to be placed for example in a sick-room together with equipment requiring absolutely pure water such as apparatuses for hemodialysis, peritoneal dialysis or hemofiltration.

US—A 3 708 069 describes a reverse osmosis unit whereby raw water enters the unit by an inlet and passes by means of a pump driven by an electric motor to a bank of membranes. Treated water leaves the unit by an outlet, whereas concentrate is ejected via a valve. In its course of flow from the pump to the membranes the raw water passes through a plurality of pipes arranged around the motor to cool the motor. No solution is however given as regards the problem to provide a good sound insulation.

The problem of sound-insulation of reverse-osmosis units has however been recognized and has been tackled for example in DE—A—2 301 904 by surrounding the unit in a heat and sound insulating housing and in DE—A—2 804 653 which describes a manner of sound insulating motor/pump aggregates for medical use, by completely immersing such aggregates in the liquid. However, neither of these documents suggests complete solution corresponding to the present invention as defined below and in the following claims.

### Disclosure of Invention

The above-mentioned problem is solved in accordance with the invention in that the motor of the pump is practically wholly surrounded by cooling water in such a manner that an effective sound insulation is obtained in combination with the heating of the water and the cooling of the motor. In this way the efficiency of the module is simultaneously increased through the heating of the water at the same time as you get a compact construction working at a very low sound level without the demand of any separate medium for the cooling of the pump.

The motor may be enclosed, for example, in a water-tight cylindrical casing which in turn is enclosed in a water-tight outer jacket with inlet and outlet for the water. This outer jacket may be manufactured in one piece, preferably by injection moulding.

It is appropriate to produce the outer jacket in the form of a plane film which can be wound tightly around the water-tight casing of the motor. By providing the outer jacket on its inside and/or the casing on its outside with means in the form of ridges, flanges, etc., the path of flow of the water can be lengthened.

By combining the design in accordance with the invention, moreover, with a constant-flow valve, further substantial advantages can be obtained which are evident from the patent application EP—A—058 304 submitted at the same time, entitled "A water-purification unit with constant-flow valve".

### Brief Description of Drawings

In the following the invention will be described in greater detail with reference to the enclosed drawings, which show by way of example a preferred embodiment of the same.

Fig. 1 shows a block diagram for the unit as a whole.

Fig. 2 shows a constant-flow valve included in the unit.

Fig. 3 shows the liquid-cooled pump motor included in the unit.

Figures 4—7 finally show examples of a cooling jacket which can replace the cooling jacket shown in fig. 3.

Fig. 5 here shows a section alone ling V—V in fig. 4 and similarly figures 6 and 7 show sections along lines VI—VI and VII—VII respectively in fig. 4.

### Best Mode of Carrying out the Invention

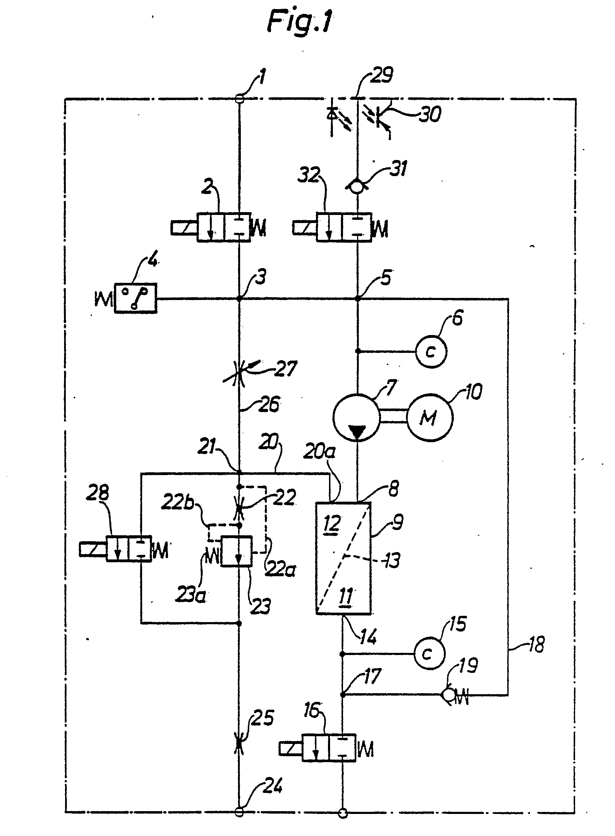

In the block diagram of a preferred embodiment of the subject of the invention shown in fig. 1 a water inlet is designated 1. From the water inlet the water flows through an inlet valve 2 shown schematically, which for example may be a conventional solenoid valve. At a point 3 the pressure of the water is measured by means of a pressure gauge 4. From the point 3 the water is conducted further via a branch point 5, a conductivity meter 6 and a pump 7 to the inlet 8 of a module 9 for reverse osmosis. In the course of this, the water is heated by being used at the same time for the cooling of the pump motor 10. The module 9 is divided into a clean water side 11 and an input side 12. These sides are separated by a diaphragm 13 indicated schematically. The cleaned water is conducted out via an outlet and monitored with the help of a conductivity meter 15. The purified water is passed via a valve 16 to a place of consumption, e.g. an apparatus for haemodialysis. From a branch point 17 the excess water is conducted through a return pipe 18 which contains a non-return valve 19.

From the side 12 of the module 9 non-purified water is conducted via an outlet 20a and the pipe 20 to a distributing point 21. By means of a constant-flow valve 22—23 connected to this point it is ensured that a small amount of liquid is conducted at all times from the module 9 through the pipe 20 and further to a drain 24.

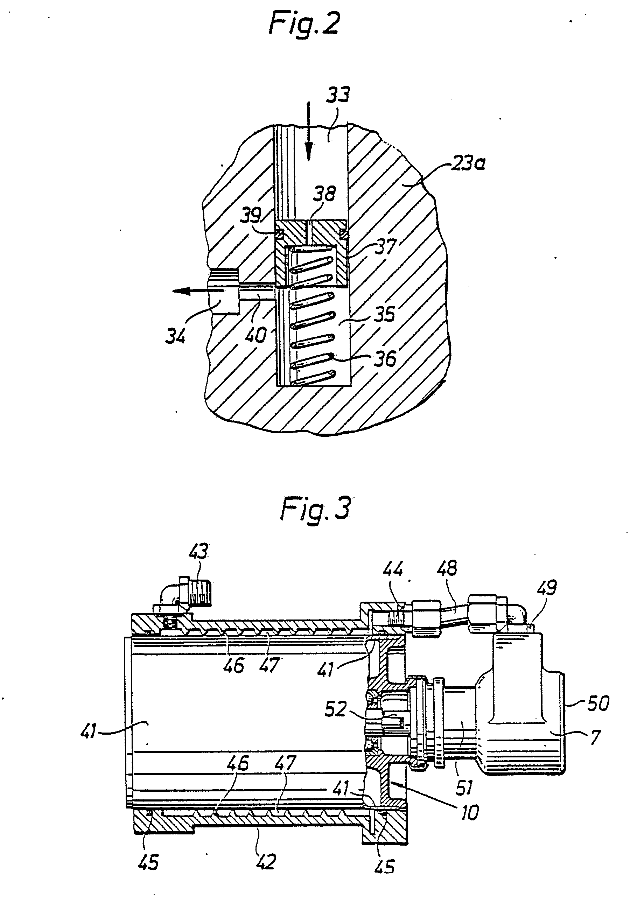

Numerals 22—23 thus designate a constant-flow valve which may be of the design as shown in fig. 2. Lines 22a and 22b together with the spring 23a indicate that the valve is acted upon from one direction by the input pressure, whilst from the opposite direction it is acted upon partly by the secondary pressure and partly by a spring pressure. The liquid may also pass through a throttle 25. The part of the liquid in the pipe 20 which does not go through the constant flow valve is conducted instead through a pipe 26 and an adjustable valve 27, e.g. a needle valve, back to point 3 and further through point 5 to the inlet 8 of the module 9.

The module may nevertheless become silted up or obstructed in some other manner and therefore requires flushing through from time to time. For this purpose a special flushing valve 28 is arranged parallel with the constant-flow valve 22—23. When the valve 28 is opened, larger amounts of liquid can be flushed through the input side 12 of the module 9.

To make it possible to sterilize the system, it is provided with an intake 29 for sterilizing agent. This intake is provided with an optical system 30, shown schematically, which is capable of detecting whether or not the intake is connected to a source of sterilizing agent. If such a source is connected, only special sterilization programmes can be carried out, which means that there is no risk then of any patient coming into contact with the sterilizing agent. This sterilizing agent is thus conducted from the intake 29 via a non-return valve 31 and a shutoff valve 32 to the point 5 which should be located as near as possible to the inlet valve 2.

The constant-flow valve 22—23 may be of any type. However, in practice the valve 23a shown in fig. 2 has proved to be suitable. This valve 23a is provided with an inlet side 33 and an outlet side 34. In between are a pressure chamber 35 and a spring 36. The pressure chamber 35 is separated from the inlet side 33 by a piston 37 which has a throughhole 38 and is encircled by a sealing ring 39. The piston 37 is arranged so that it partially covers a duct 40 between the pressure chamber 35 and the outlet 34. When the pressure on the input side 33 is increased, the duct 40 is throttled, so that the pressure is automatically increased also in the pressure chamber 35. This in turn gives rise to a substantially constant flow through the ducts 38 and 40.

Whilst the valve described above has proved to be suitable, it will nevertheless be clear to those versed in the art, that other types of conventional constant-flow valves can also be used.

In fig. 3 are shown the pump 7 referred to earlier and its liquid-cooled motor 10. The motor here is fully enclosed in a water-tight cylindrical casing 41, which in turn is enclosed in a water-tight outer jacket 42. This outer jacket 42 is provided with an inlet 43 and an outlet 44 for the water. The seal between the casing 41 and the outer jacket 42 is achieved with the help of two O-rings 45. By means of a spiral-shaped ridge 46 the water is forced to pass the motor 10 in a helical path 47. In this manner the path of flow of the water is substantially lengthened. From the outlet 44 the water flows through the pipe 48 to the inlet 49 of the pump 7. The pump outlet is not shown. It may be arranged either at the back of the pump or at its end face 50. The pump 7 and the motor 10 are connected to one another by the connection piece 51 and the mechanical driving clutch 52.

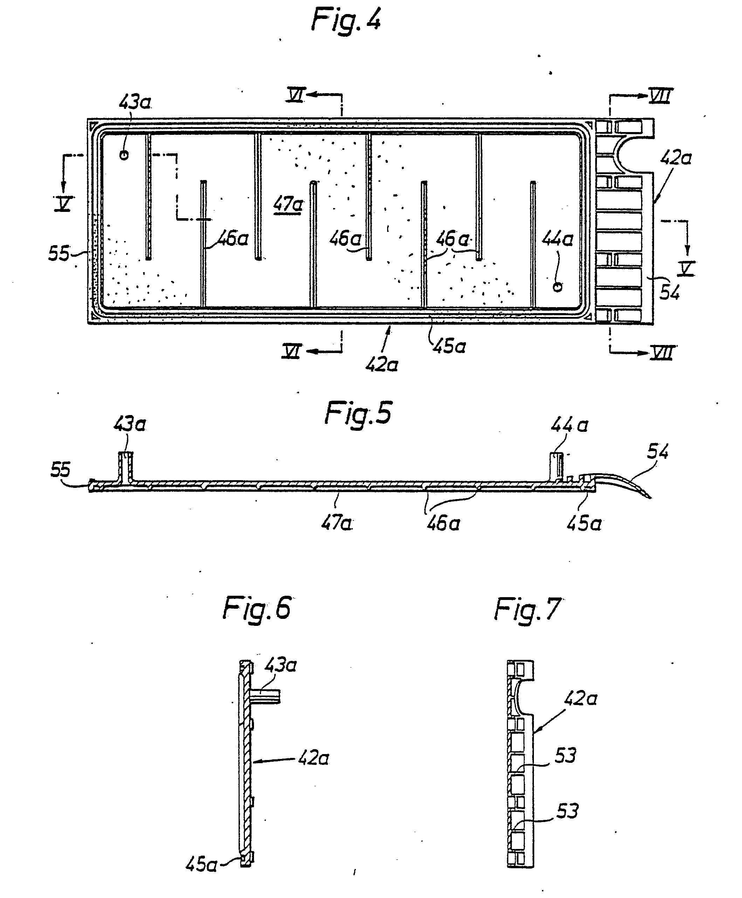

In figures 4—7 is shown an alternative to the outer jacket 42 shown in fig. 3. Here a corresponding jacket 42a has been manufactured in the form of a plane film which can be tightly wound round the water-tight casing 41 of the motor. The sheet 42a is provided on its inside with ridges 46a which force the water to move in a zigzag-shaped course 47a from the inlet 43a to the outlet 44a. The groove 45a is intended to accept a packing corresponding to the O-rings 45 in the design according to fig. 3. Finally, numeral 53 designates a framework of flanges which are intended to reinforce a trailing edge 54 which in an appropriate manner is joined to the other end 55 of the sheet when the sheet is wound round the motor 10.

### Claims

1. A water-purification unit comprising a module (9) for reverse osmosis with an inlet (8) for non-purified water, an outlet (14) for purified water and an outlet (20a) for non-purified water, the water being supplied to the module (9) by means of a motor-driven pump (7), the motor (10) of the pump being cooled with the help of the water input, the latter being heated at the same time, characterized in that the motor (10) is practically wholly surrounded by the cooling water in such a manner than an effective sound insulation is obtained in combination with the heating of the water and the cooling of the motor.

2. A water-purification unit is accordance with claim 1, characterized in that the motor (10) is enclosed in a water-tight cylindrical casing (41) which in turn is enclosed in a water-tight outer jacket (42) with inlet and outlet (43 and 44 respectively) for the water.

3. A water-purification unit in accordance with claim 2, characterized in that the outer jacket (42a) is manufactured in one piece and preferably by injection moulding.

4. A water-purification unit in accordance with claim 3, characterized in that the outer jacket (42a) is made in the form of a plane film which is wound tightly round the water-tight casing (41) of the motor.

5. A water-purification unit in accordance with any one of claims 2—4, characterized in that the outer jacket (42a) on its inside and/or the casing (41) on its outside is provided with devices in the form of for example, ridges, flanges, etc. (46, 46a) by means of which the path of flow of the water can be lengthened.

## Patentansprüche

1. Wasserreinigungseinheit mit einem Baustein (9) für umgekehrte Osmose mit einem Einlaß (8) für ungereinigtes Wasser, einem Auslaß (14) für gereinigtes Wasser und einem Auslaß (20a) für ungereinigtes Wasser, wobei das Wasser dem Baustein (9) mit Hilfe einer mit einem Motor angetriebenen Pumpe (7) zugeführt wird, der Motor (10) der Pumpe mit Hilfe des eingeführten Wasser gekühlt wird und letzteres gleichzeitig erwärmt wird, dadurch gekennzeichnet, daß der Motor (10) praktisch vollständig derart von dem Kühlwasser umgeben ist, daß eine wirksame Schallisolierung in Verbindung mit dem Erwärmen des Wassers und dem Kühlen des Motors erhalten wird.

2. Wasserreinigungseinheit nach Anspruch 1, dadurch gekennzeichnet, daß der Motor (10) in einem wasserdichten zylindrischen Gehäuse (41) eingeschlossen ist, das seinerseits in einem wasserdichten Außenmantel (42) mit Einlaß und Auslaß (43 bzw. 44) für das Wasser eingeschlossen ist.

3. Wasserreinigungseinheit nach Anspruch 2, dadurch gekennzeichnet, daß der Außenmantel (42a) in einem Stück und vorzugsweise durch Spritzguß hergestellt ist.

4. Wasserreinigungseinheit nach Anspruch 3, dadurch gekennzeichnet, daß der Außenmantel (42a) in der Form einer ebenen Folie hergestellt ist, die dicht um das wasserdichte Gehäuse (41) des Motors gewickelt ist.

5. Wasserreinigungseinheit nach einem der Ansprüche 2 bis 4, dadurch gekennzeichnet, daß der Außenmantel (42a) auf seiner Innenseite und/oder das Gehäuse (41) auf seiner Außenseite mit Einrichtungen beispielsweise in der Form von Rippen, Flanschen usw. (46, 46a) versehen ist, mit Hilfe derer der Fließweg des Wassers verlängert werden kann.

## Revendications

1. Unité de purification d'eau comprenant un module (9) d'osmose inverse avec une entrée (8) pour l'eau non purifiée, une sortie (14) pour l'eau purifiée et une sortie (20a) pour l'eau non purifiée, l'eau étant envoyée au module (9) au moyen d'une pompe (7) entraînée par un moteur, le moteur (10) de la pompe étant refroidi à l'aide de l'entrée d'eau, celle-ci étant réchauffée en même temps, caractérisée en ce que le moteur (10) est pratiquement complètement entouré par l'eau de refroidissement, de sorte qu'une isolation phonique effective est obtenue en combinaison avec le réchauffement de l'eau et le refroidissement du moteur.

2. Unité de purification d'eau suivant la revendication 1, caractérisée en ce que le moteur (10) est enfermé dans un carter cylindrique (41) étanche à l'eau qui est lui-même enfermé dans une enveloppe extérieure (42) étanche à l'eau, comportant une entrée et une sortie (42 et 44 respectivement) pour l'eau.

3. Unité de purification d'eau suivant la revendication 2, caractérisée en ce que l'enveloppe extérieure (42a) est fabriquée en une seule pièce et de préférence par moulage par injection.

4. Unité de purification d'eau suivant la revendication 3, caractérisée en ce que l'enveloppe extérieure (42a) est fabriquée sous la forme d'un film plan qui est enroulé étroitement autour du carter (41), étanche à l'eau, du moteur.

5. Unité de purification d'eau suivant l'une quelconque des revendications 2 à 4, caractérisée en ce que l'enveloppe extérieure (42a) sur sa face intérieure et/ou le carter (41) sur sa face extérieure comportent des dispositifs sous la forme, par exemple, de nervures, collerettes, etc. (46, 46a), au moyen desquels le parcours de l'eau peut être allongé.

# Fig.1

# Fig.2

# Fig.3

## Fig. 4

## Fig. 5

## Fig. 6

## Fig. 7